# FASCICULE DE BREVET EUROPEEN

(11) **EP 0 556 097 B1**
(45) Date de publication et mention de la délivrance du brevet: **30.08.1995**
(21) Numéro de dépôt: 93400280.9
(22) Date de dépôt: 04.02.1993
(51) Int. Cl.: B61G 1/10, B60D 1/155

(54) **Dispositif d'accouplement pour le remorquage d'un véhicule ferroviaire**
Kupplungsvorrichtung zum Abschleppen eines Schienenfahrzeuges
Coupling device for the towing of a railway vehicle

(30) Priorité: 10.02.1992 FR 9201473
(43) Date de publication de la demande: 18.08.1993
(73) Titulaire: GEC ALSTHOM SA, 75116 Paris (FR)
(72) Inventeur: Gobert, Jean Christophe, F-17340 Chatelaillon Plage (FR); Mathe, Marcel, F-17000 La Rochelle (FR)
(74) Mandataire: Fournier, Michel

(56) Documents cités:
- EP-A- 0 176 442
- FR-A- 1 538 907
- US-A- 3 326 573

## Description

La présente invention concerne un dispositif permettant le remorquage d'un véhicule ferroviaire (tramway, métro léger, par exemple) par un autre circulant sur un réseau dont les courbes sont de faible rayon.

En cas de panne d'un véhicule ferroviaire nécessitant un remorquage, il est nécessaire, afin de dégager rapidement le réseau, de disposer d'un système permettant un accouplement simple et rapide. Cet accouplement doit pouvoir être réalisé par le conducteur ou la conductrice du véhicule en panne.

On connaît des dispositifs d'accouplement pour des véhicules ferroviaires de grandes lignes qui ne peuvent s'adapter sur un véhicule du type tramway que difficilement en raison de leurs angles de débattement très importants sur le plan horizontal. En outre ceux-ci présentent les défauts suivants: poids trop élevé, détérioration de l'aspect esthétique de l'avant du véhicule à cause de l'impossibilité de caréner la partie située sous la cabine, encombrement important.

On connaît également, dans le cas de tramways, un système avec barre s'escamotant dans un timon logé sous le châssis de la cabine. Ce système présente le défaut de n'être pas très facile à manoeuvrer. En effet, la barre, lorsqu'elle est sortie, n'est pas maintenue pour permettre une manoeuvre facile par une seule personne pour l'accouplement avec la barre du même type de l'autre véhicule. Il faut guider manuellement ces barres, soit pour le début de l'escamotage, soit pour la fin de leur sortie.

On connait également du brevet FR 1 538 907 un dispositif d'attelage télescopique conforme au préambule de la revendication 1.

Le but de la présente invention est de pallier ces inconvénients grâce à un dispositif permettant une manoeuvre souple et aisée, un maintien de la barre en position horizontale lors de l'accouplement, un entretien facile, la possibilité d'installer un carénage articulé pour masquer le dispositif au repos afin de conserver un bon aspect esthétique.

L'invention a donc pour objet un dispositif d'accouplement pour le remorquage d'un véhicule ferroviaire, formé d'au moins deux éléments emboîtés, lesdits éléments constituant un ensemble télescopique et présentant chacun une extrémité arrière et une extrémité avant correspondant à la direction de remorquage, le premier de ces éléments étant solidaire du véhicule ferroviaire et le deuxième élément pouvant glisser par rapport au premier depuis une position de repos pour laquelle ces deux éléments sont emboîtés, jusqu'à une position de remorquage pour laquelle l'extrémité arrière du deuxième élément est retenu par l'extrémité avant du premier, caractérisé en ce que le premier élément est articulé par rapport au véhicule ferroviaire.

Le premier élément peut être maintenu horizontal grâce à un organe de maintien solidaire du véhicule ferroviaire.

Le premier élément peut être solidaire du véhicule par une articulation à rotule disposée à son extrémité arrière.

Le deuxième élément peut glisser à l'intérieur du premier.

Les éléments étant tubulaires, l'extrémité avant du premier élément peut comporter un fourreau fixé à l'intérieur de ce premier élément et dans lequel glisse le deuxième élément dont l'extrémité arrière possède une section plus large permettant son glissement à l'intérieur du tube formant le premier élément. L'extrémité arrière du deuxième élément joue donc le rôle d'un piston. Ceci confère un bon alignement du deuxième élément en position de remorquage par rapport au premier.

Le fourreau peut comporter un segment de guidage pour le glissement du deuxième élément.

L'extrémité arrière de section plus large du deuxième élément peut posséder un segment de guidage pour son glissement à l'intérieur du premier élément.

Le deuxième élément étant mobile en rotation par rapport au premier élément, son extrémité avant peut avantageusement se terminer par une tête d'accouplement disposée d'un même côté par rapport à l'axe de l'ensemble télescopique et qui, lors d'un accouplement, s'ajuste à la tête d'accouplement du dispositif d'accouplement d'un autre véhicule ferroviaire pour présenter une surface commune, des moyens de fixation des têtes entre elles étant prévus.

Ces moyens de fixation peuvent comporter au moins un axe d'accouplement.

L'invention sera mieux comprise et d'autres avantages et particularités apparaîtront à la lecture de la description qui va suivre, donnée à titre non limitatif, accompagnée des dessins annexés parmi lesquels:
- la figure 1 est une vue en coupe longitudinale du dispositif d'accouplement selon l'invention,
- la figure 2 est une vue en coupe longitudinale partielle de l'accouplement de deux dispositifs selon l'invention.

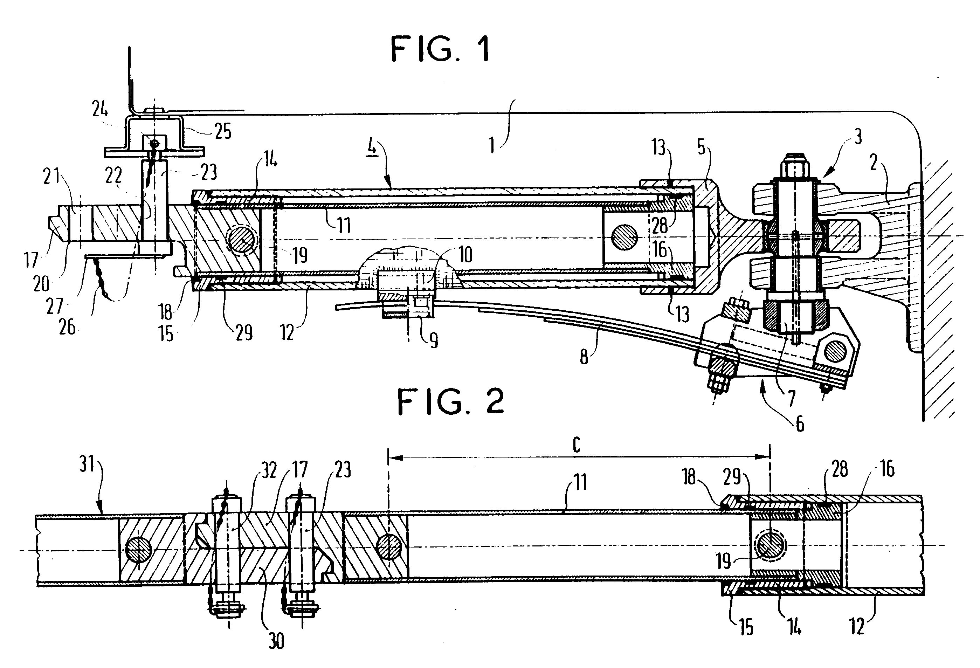

Selon la figure 1, le dispositif d'accouplement est en position de repos. Il est entièrement logé sous le véhicule ferroviaire 1. Le dispositif est maintenu au véhicule par le support 2 solidaire du véhicule. Un système à rotule 3, disposé entre le support 2 et le dispositif d'accouplement 4, permet un débattement du dispositif autour du centre de la rotule. La chape 5 assure, par l'une de ses extrémités, la liaison avec la rotule et par son autre extrémité la liaison mécanique avec le reste du dispositif.

Le dispositif d'accouplement 4 est soutenu, pour son maintien horizontal par un organe de maintien 6 fixé à l'axe 7 du système à rotule 3. Ainsi, l'organe de maintien 6 suit les mouvements du dispositif d'accouplement 4. L'organe de maintien comporte des lames de ressort 8 terminées par un étrier 9 fixé à un support d'étrier 10 soudé sur le dispositif d'accouplement 4.

Le dispositif d'accouplement comprend un ensemble télescopique tubulaire principalement constitué par le tube intérieur 11 et le tube extérieur 12. Le tube extérieur 12 est vissé dans la chape 5. Cette fixation est renforcée par des pastilles de nylon pressées contre le tube par des vis 13. L'extrémité avant du tube extérieur 12 est filetée intérieurement pour recevoir le fourreau avant 14. Le fourreau 14 est vissé sur le tube 12 jusqu'à ce que sa collerette 15 vienne en butée sur ce tube.

Le tube intérieur 11 comporte à son extrémité arrière un piston 16 vissé sur le filetage interne de cette extrémité du tube 11. Cette liaison est rendue définitive par une soudure circulaire entre le piston et le tube 11.

Le tube intérieur 11 comporte à son extrémité avant un filetage intérieur sur lequel se visse la partie arrière de la tête d'accouplement 17. Cette liaison est rendue définitive par soudure.

La figure 1 montre le dispositif selon l'invention en position repliée. Le piston 16 est en butée contre le fond de la chape 5. Le tube intérieur 11 est entièrement rentré dans le tube extérieur 12. Un joint racleur 18 logé dans la face interne de la collerette 15 assure le nettoyage du tube intérieur 11 lorsqu'il est manoeuvré pour rentrer dans le tube extérieur 12. L'axe d'accouplement 19 traverse la partie arrière de la tête d'accouplement 17, les tubes 11 et 12 ainsi que le fourreau 14. Il est bloqué en translation, de manière connue, par une chaînette et une goupille. Il reprendra tous les efforts de traction et de compression lors d'un remorquage.

La tête d'accouplement 17 comprend une partie avant de forme plate et dont la masse est entièrement située d'un même côté de l'axe des tubes 11 et 12. Sa face inférieure 20 se situe dans l'axe de ces tubes. La partie avant de la tête d'accouplement 17 est percée de deux trous 21 et 22 perpendiculaires à la face 20. Le trou 22 reçoit un axe 23 d'immobilisation du dispositif d'accouplement en position repliée. La tête 24 de l'axe 23 est alors retenue par le support 25 solidaire du véhicule. Une chaînette 26 relie les deux côtés de l'axe 23 d'une part par la poignée d'axe 27 et d'autre part jusqu'à une goupille logée dans la tête 24 de l'axe 23.

Le piston 16 glisse dans le tube extérieur 12 selon la surface de sa partie arrière de section plus large. Celle-ci est équipée d'un segment de guidage 28.

Le fourreau 14 solidaire du tube extérieur 12 est équipé d'un segment de guidage 29 pour le glissement du tube intérieur 11.

Lorsque l'on veut déplier un ensemble télescopique, on retire l'axe de retenue 23 en ôtant sa goupille et après avoir fait basculer sa tête 24 du logement prévu sur le support 25. On retire l'axe d'accouplement 19. On tourne d'un quart de tour le tube intérieur 11 pour le dégager de sa butée de positionnement en rotation prévue dans la chape 5. On déplie l'ensemble télescopique, pour une course C, jusqu'à ce que le piston 16 vienne en butée sur le fourreau 14. Le tube intérieur 11 est encore tourné d'un quart de tour pour se placer contre la butée de positionnement en rotation pourvue dans le fourreau 14. L'axe d'accouplement 19 est remis à sa place. Le dispositif selon l'invention est prêt à être accouplé avec un dispositif identique porté par un autre véhicule.

Pour réaliser cet accouplement, le véhicule remorqueur se place devant le véhicule à remorquer. Les dispositifs d'accouplement sont disposés de manière désaxée, d'un même côté de la voie ferrée. On les manoeuvre pour pouvoir enfiler l'un des axes d'accouplement par exemple l'axe 23 de manière à réunir mécaniquement la tête d'accouplement 17 avec la tête d'accouplement 30 de l'autre dispositif d'accouplement 31 (voir la figure 2). Il faut remarquer que les têtes d'accouplement 17 et 30 se trouvent alors, suite aux manoeuvres effectuées, en position tête-bêche.

Une fois l'axe 23 installé, le véhicule remorqueur s'éloigne légèrement du véhicule à remorquer et les dispositifs d'accouplement s'alignent. On peut alors placer l'axe d'accouplement 32 entre les têtes 17 et 30.

## Revendications

1. Dispositif d'accouplement pour le remorquage d'un véhicule ferroviaire, formé d'au moins deux éléments emboîtés, lesdits éléments constituant un ensemble télescopique et présentant chacun une extrémité arrière et une extrémité avant correspondant à la direction de remorquage, le premier (12) de ces éléments étant solidaire du véhicule ferroviaire et le deuxième élément (11) pouvant glisser par rapport au premier depuis une position de repos pour laquelle ces deux éléments sont emboîtés, jusqu'à une position de remorquage pour laquelle l'extrémité arrière du deuxième élément est retenu par l'extrémité avant du premier, caractérisé en ce que le premier élément est articulé par rapport au véhicule ferroviaire (1).

2. Dispositif selon la revendication 1, caractérisé en ce que le premier élément est maintenu horizontal grâce à un organe de maintien (6).

3. Dispositif selon l'une des revendications 1 ou 2, caractérisé en ce que le premier élément (12) est solidaire du véhicule par une articulation à rotule (3) disposée à son extrémité arrière.

4. Dispositif selon l'une quelconque des revendications 1 à 3, caractérisé en ce que le deuxième élément (11) glisse à l'intérieur du premier.

5. Dispositif selon la revendication 4, caractérisé en ce que lesdits éléments étant tubulaires, l'extrémité avant du premier élément (12) comporte un fourreau (14) fixé à l'intérieur de ce premier élément et dans lequel glisse le deuxième élément (11) dont l'extrémité arrière possède une section plus large permettant son glissement à l'intérieur du tube formant le premier élément.

6. Dispositif selon la revendication 5, caractérisé en ce que le fourreau comporte un segment de guidage (29) pour le glissement du deuxième élément.

7. Dispositif selon l'une des revendications 5 ou 6, caractérisé en ce que l'extrémité arrière de section plus large du deuxième élément possède un segment de guidage (28) pour son glissement à l'intérieur du premier élément.

8. Dispositif selon l'une quelconque des revendications précédentes, caractérisé en ce que, le deuxième élément étant mobile en rotation par rapport au premier élément, son extrémité avant se termine par une tête d'accouplement (17) disposée d'un même côté par rapport à l'axe de l'ensemble télescopique et qui, lors d'un accouplement, s'ajuste à la tête d'accouplement (30) du dispositif d'accouplement (31) d'un autre véhicule ferroviaire pour présenter une surface commune, des moyens de fixation des têtes entre elles étant prévus.

9. Dispositif selon la revendication 8, caractérisé en ce que les moyens de fixation comportent au moins un axe d'accouplement (23, 32).

## Claims

1. A coupling device for towing away a rail vehicle, the device being formed of at least two interfitting elements, said elements constituting a telescopic assembly, and each of said elements having a rear end and front end corresponding to the towing direction, a first one (12) of the elements being secured to the rail vehicle and the second element (11) being capable of sliding relative to the first element from a rest position in which the two elements are interfitted to a towing position in which the rear end of the second element is retained by the front end of the first element, said device being characterized in that the first element is hinged relative to the rail vehicle (1).

2. A device according to claim to 1, characterized in that the first element is held horizontal by means of a holding member (6).

3. A device according to claim 1 or 2, characterized in that the first element (12) is secured to the vehicle via a ball-joint hinge (3) disposed at the rear end of said first element.

4. A device according to any one of claims 1 to 3, characterized in that the second element (11) is mounted to slide inside the first element.

5. A device according to claim 4, characterized in that, with said elements being tubular, the front end of the first element (12) is provided with a bushing (14) fixed inside the first element and inside which the second element (11) can slide, the rear end of the second element having a wider cross-section enabling it to slide inside the tube forming the first element.

6. A device according to claim 5, characterized in that the bushing includes a guide segment (29) for enabling the second element to slide.

7. A device according to claim 5 or 6, characterized in that the rear end of wider cross-section of the second element has a guide segment (28) for enabling it to slide inside the first element.

8. A device according to any preceding claim, characterized in that, with the second element being mounted to be rotatable relative to the first element, its front end is terminated by a coupling head (17) which is disposed on one side of the axis of the telescopic assembly, and which, on coupling, fits the coupling head (30) of the coupling device (31) of another rail vehicle over a common surface, means for fixing the heads together being provided.

9. A device according to claim 8, characterized in that the fixing means include at least one coupling pin (23, 32).

## Patentansprüche

1. Kopplungsvorrichtung zum Abschleppen eines Schienenfahrzeugs, die mindestens zwei ineinander verschachtelte und eine Teleskopeinheit bildende Elemente enthält, wobei jedes Element ein hinteres und ein vorderes Ende entsprechend der Abschlepprichtung enthält und das erste Element (12) mit dem Schienenfahrzeug fest verbunden ist, während das zweite Element (11) bezüglich des ersten Elements von einer Ruhestellung, in der die beiden Elemente ineinander geschoben sind, bis in eine Abschleppstellung gleiten kann, in der das hintere Ende des zweiten Elements vom vorderen Ende des ersten Elements gehalten wird, dadurch gekennzeichnet, daß das erste Element am Schienenfahrzeug (1) angelenkt ist.

2. Vorrichtung nach Anspruch 1, dadurch gekennzeichnet, daß das erste Element mit Hilfe eines Halteorgans (6) in waagrechter Stellung gehalten wird.

3. Vorrichtung nach einem der Ansprüche 1 oder 2, dadurch gekennzeichnet, daß das erste Element (12) am Fahrzeug über ein Kugelgelenk (3) angelenkt ist, das sich an dessen rückwärtigem Ende befindet.

4. Vorrichtung nach einem beliebigen der Ansprüche 1 bis 3, dadurch gekennzeichnet, daß das zweite Element (11) in dem ersten gleitet.

5. Vorrichtung nach Anspruch 4, dadurch gekennzeichnet, daß die Elemente rohrförmig sind und das vordere Ende des ersten Elements (12) ein Futter (14) aufweist, das in diesem ersten Element befestigt ist und in dem das zweite Element (11) gleitet, wobei dessen hinteres Ende einen größeren Querschnitt besitzt, der ein Gleiten im Inneren des das erste Element bildenden Rohrs erlaubt.

6. Vorrichtung nach Anspruch 5, dadurch gekennzeichnet, daß das Futter ein Führungssegment (29) für die Gleitbewegung des zweiten Elements aufweist.

7. Vorrichtung nach einem der Ansprüche 5 oder 6, dadurch gekennzeichnet, daß hintere Ende des zweiten Elements mit größerem Querschnitt ein Führungssegment (28) für die Gleitbewegung im Inneren des ersten Elements enthält.

8. Vorrichtung nach einem beliebigen der vorhergehenden Ansprüche, dadurch gekennzeichnet, daß das zweite Element in Drehrichtung bezüglich des ersten Elements beweglich ist und sein vorderes Ende in einem Kopplungskopf (17) endet, der sich auf einer Seite bezüglich der Achse der Teleskopeinheit befindet und während einer Ankopplung an den Kopplungskopf (30) der Kopplungsvorrichtung (31) eines anderen Schienenfahrzeugs anpaßt, so daß sich eine gemeinsame Oberfläche ergibt, und daß Mittel zur gegenseitigen Befestigung der Köpfe vorgesehen sind.

9. Vorrichtung nach Anspruch 8, dadurch gekennzeichnet, daß die Befestigungsmittel mindestens einen Kopplungssplint (23, 32) aufweisen.
